# EUROPÄISCHE PATENTSCHRIFT

(11) **EP 3 445 510 B1**
(45) Veröffentlichungstag und Bekanntmachung des Hinweises auf die Patenterteilung: **26.08.2020**
(21) Anmeldenummer: 17728039.3
(22) Anmeldetag: 18.04.2017
(51) Int. Cl.: B21D 5/00, B21D 5/04, G01B 21/22

(54) **BIEGEBALKEN FÜR EINE SCHWENKBIEGEMASCHINE**
BENDING BEAM FOR A SWIVEL BENDING MACHINE
BARRE DE PLIAGE POUR PLIEUSE PIVOTANTE

(30) Priorität: 18.04.2016 AT 503472016
(43) Veröffentlichungstag der Anmeldung: 27.02.2019
(73) Patentinhaber: TRUMPF Maschinen Austria GmbH & Co. KG., 4061 Pasching (AT)
(72) Erfinder: AUZINGER, Michael, 4040 Linz (AT); SPEZIALI, Stefano, 06034 Foligno (PG) (IT)
(74) Vertreter: Burger, Hannes
(86) Internationale Anmeldenummer: PCT/AT2017/060096
(87) Internationale Veröffentlichungsnummer: WO 2017/181208

(56) Entgegenhaltungen:
- EP-A1- 2 147 729
- WO-A1-2004/108318
- WO-A1-2016/011472
- WO-A2-2013/059851
- DE-U1-202010 006 391
- JP-A- H11 216 520

## Beschreibung

Die Erfindung betrifft einen Biegebalken für eine Schwenkbiegemaschine gemäß dem Oberbegriff des Anspruches 1 sowie ein Verfahren zum Messen eines Biegewinkels an einem Werkstück in einer Schwenkbiegemaschine gemäß dem Oberbegriff des Anspruches 11.

Der Erfindungsgegenstand wird im Folgenden als Biegebalken bezeichnet, wobei auch alternativ als Kantschwinge oder Biegewange bezeichnete Gegenstände umfasst sind.

Um bei Schwenkbiegemaschinen die ständig steigenden Genauigkeitsanforderungen an die bei gebogenen Werkstücken erzielten Biegewinkel zu erfüllen, gibt es bereits Ausführungen mit Winkelmesssystemen, mit denen das Umformverhalten von Werkstücken, insbesondere die Rückfederung, quantitativ erfasst und bei nachfolgenden Biegevorgängen einkalkuliert werden kann. Beispielsweise ist aus JP H 07275952 A1 eine Schwenkbiegemaschine bekannt, bei der im Biegebalken ein taktil arbeitendes Winkelmesssystem integriert ist.

Weiters ist aus WO 2004/108318 A1 eine Schwenkbiegemaschine mit einem berührungslos arbeitenden Winkelmesssystem bekannt, das in einem Biegebalken mit einem C-förmigen Balkenquerschnitt integriert ist.

Die bestehenden Lösungen sind jedoch auf einfache Werkstückgeometrien beschränkt und die Anwendbarkeit zur allgemeinen Erhöhung der Biegegenauigkeit sehr beschränkt.

Aufgabe der vorliegenden Erfindung war es, die Nachteile des Standes der Technik zu überwinden und eine Vorrichtung und ein Verfahren zur Verfügung zu stellen, mittels derer ein Benutzer in der Lage ist an Schwenkbiegemaschinen bei unterschiedlichsten Anwendungsfällen genaue Biegewinkelmessungen durchzuführen.

Diese Aufgabe wird durch eine Vorrichtung und ein Verfahren gemäß den Ansprüchen gelöst.

Die erfindungsgemäße Vorrichtung besteht in einem Biegebalken für eine Schwenkbiegemaschine, wobei der längliche Biegebalken einen etwa C-förmigen Balkenquerschnitt und zwei bezüglich einer, vorzugsweise horizontalen Mittelebene gegenüberliegende und einander zugewandte in Längsrichtung des Biegebalkens verlaufende Biegewerkzeuge aufweist, zwischen denen ein zu biegender Werkstückabschnitt eines Werkstücks einführbar ist. Dabei ist in dem vom C-förmigen Balkenquerschnitt umschlossenen Inneren des Biegebalkens ein Winkelmesssystem zur berührungslosen Messung eines Biegewinkels angeordnet, mit dem an einem von einem der Biegewerkzeuge gebogenen Werkstückabschnitt ein auf eine Referenzebene bezogener Biegewinkel messbar ist. Kennzeichnend dabei ist, dass das Winkelmesssystem eine erste Winkelmesseinheit umfasst, die unterhalb der Mittelebene angeordnet ist und einen ersten Messbereich aufweist, der zum überwiegenden Teil oberhalb der Mittelebene liegt, und eine zweite Winkelmesseinheit umfasst, die oberhalb der Mittelebene angeordnet ist und einen zweiten Messbereich aufweist, der zum überwiegenden Teil unterhalb der Mittelebene liegt.

Durch diese Aufteilung des möglichen Messbereichs des Winkelmesssystems in zumindest zwei Messbereiche kann die Anwendbarkeit der Biegewinkelmessung auf unterschiedlichste Werkstückgeometrien erweitert werden und darauf basierend eine verbesserte Genauigkeit der hergestellten Biegewinkel erzielt werden. Der Freiraum innerhalb des Biegebalkens ist dadurch besser nutzbar bzw. besteht eine größere Flexibilität bei der Positionierung des zu messenden Werkstückabschnitts in Bezug auf die Winkelmesseinheiten.

Um die Positionierung des Biegebalkens mit den Winkelmesseinheiten relativ zum zu vermessenden Werkstückabschnitt zu vereinfachen bzw. die dazu nötigen Verstellwege zu minimieren, ist es von Vorteil, wenn sowohl der erste Messbereich als auch der zweite Messbereich die Mittelebene zwischen den Biegewerkzeugen einschließt. Es entsteht dadurch ein durchgehender Gesamtmessbereich, wobei im Bereich der Mittelebene eine Überlappung der Messbereiche besteht und je nach vorliegender Werkstückgeometrie, die für eine Biegewinkelmessung besser geeignete Winkelmesseinheit verwendet werden kann.

Zuverlässige Winkelmessungen bei einem gleichzeitig vergleichsweise großen erfassbaren Messbereich sind möglich, wenn die Winkelmesseinheiten jeweils einen Lichtschnittsensor mit einem Linienlaser und einer dazu distanzierten Bilderfassungseinheit umfassen. Die Verwendung von Lichtschnittsensoren ist bei Biegemaschinen hat sich bereits bewährt, insbesondere durch einen geringeren Positionieraufwand als bei taktilen Systemen.

Ein besonders großer Freiraum für gebogene Werkstücke, an denen ein Biegewinkel gemessen werden soll, wird erzielt, wenn die lichte Weite zwischen den Winkelmesseinheiten zumindest 75 % eines zwischen den Biegewerkzeugen bestehenden Werkzeugabstandes entspricht.

Für die praktische Anwendung vorteilhaft ist es weiters, wenn das Winkelmesssystem mittels einer Führungsanordnung in Längsrichtung des Biegebalkens verstellbar ist, insbesondere über ein Ende der Biegewerkzeuge hinaus verstellbar ist. Dadurch besteht bei langen Werkstücken die Möglichkeit entlang am Werkstückmehrere Messungen an unterschiedlichen Positionen durchzuführen, wodurch eine optimale Festlegung des Nachbiegevorganges zum Erreichen eines genauen Biegewinkels möglich ist. Weiters kann durch das seitliche Ausfahren des Winkelmesssystems der Biegefreiraum weiter vergrößert werden, wobei Werkstücke, die in diesen zusätzlichen Freiraum ragen nicht mehr vermessen werden können.

Ein gemeinsamer Antrieb und eine gemeinsame Energie- und Datenleitung für beide Messeinheiten ist möglich, wenn die Winkelmesseinheiten auf einem gemeinsamen Laufwagen befestigt sind. Der bauliche Aufwand kann dadurch gering gehalten werden.

Um eine stabilere Führung des Laufwagens mit höherer Messgenauigkeit zu gewährleisten, kann dieser auf zwei voneinander distanzierten Führungsschienen an einer von den Biegewerkzeugen distanzierten Basis des C-förmigen Balkenquerschnitts geführt sein.

Eine vorteilhafte Ausführungsform kann darin bestehen, dass am Laufwagen auf Höhe des unteren Biegewerkzeuges eine zur Mittelebene rechtwinkelig orientierte Anschlagfläche ausgebildet ist. Diese kann als Referenzanschlag für ein Werkstück verwendet werden, wodurch z.B. die Möglichkeit zur Korrektur von Greiffehlern eines Werkstückmanipulators besteht.

Eine Möglichkeit die Biegewinkelgenauigkeit basierend auf den gemessenen Biegewinkeln weiter zu erhöhen besteht darin, am Biegebalken eine Bombierungseinrichtung zur Beeinflussung der Krümmung entlang der Längsrichtung eines Biegewerkzeuges vorzusehen. Eine allfällige Verformung der Werkstückhaltevorrichtung sowie des Biegebalkens selbst kann dadurch zumindest teilweise korrigiert werden, wie die bereits bei Abkantpressen angewendet wird.

Die Erfindung bezieht sich auch auf eine aus dem Stand der Technik bekannte Schwenkbiegemaschine, umfassend einen Maschinenrahmen, eine mit dem Maschinenrahmen verbundene Werkstückhalteeinheit mit einem ersten Klemmwerkzeug und einem mit diesem zusammenwirkenden, verstellbaren zweiten Klemmwerkzeug zum Fixieren eines Werkstücks in einer insbesondere horizontalen Arbeitsebene, sodass ein zu biegender Werkstückabschnitt gegenüber der Werkstückhalteeinheit vorragt, und einen am Maschinenrahmen verstellbar gelagerten und mit einem Verstellantrieb verbundenen Biegebalken zum Biegen des Werkstückabschnitts, bei der der Biegebalken nach einem der Ansprüche 1 bis 9 ausgebildet ist.

Die Erfindung betrifft weiters ein Verfahren zum Messen eines Biegewinkels an einem Werkstück in einer Schwenkbiegemaschine mit einem länglichen Biegebalken, wobei dieser einen etwa C-förmigen Balkenquerschnitt und zwei bezüglich einer, vorzugsweise horizontalen Mittelebene gegenüberliegende und einander zugewandte in Längsrichtung des Biegebalkens verlaufende Biegewerkzeuge aufweist, zwischen denen ein zu biegender Werkstückabschnitt eines Werkstücks eingeführt wird und mittels eines im Inneren des Biegebalkens angeordneten Winkelmesssystems an einem zu vermessenden Werkstückabschnitt der Biegewinkel in Bezug auf eine Referenzebene gemessen wird. Kennzeichnend ist dabei, dass, insbesondere nach automatischer Festlegung durch eine programmierbare Steuerungsvorrichtung des Winkelmesssystems, der Biegewinkel an einem zu vermessenden Werkstückabschnitt mittels einer ersten unterhalb der Mittelebene angeordneten Winkelmesseinheit oder mittels einer zweiten oberhalb der Mittelebene angeordneten Winkelmesseinheit oder mittels erster Winkelmesseinheit und zweiter Winkelmesseinheit gemessen wird. Die damit erzielbaren vorteilhaften Effekte wurden bereits beim erfindungsgemäßen Biegebalken erläutert.

Zur weiteren Erhöhung der Winkelmessgenauigkeit kann das Verfahren zusätzlich dahingehend ergänzt werden, dass die Messung des Biegewinkels nach Entfernung des Biegewerkzeugs vom Werkstück und nachfolgender Deaktivierung oder Reduktion der Werkstückklemmung durch die Werkstückhalteeinrichtung erfolgt. Dadurch ist das Werkstück bei der Winkelmessung im Wesentlichen frei von Umformkräften und Einspannkräften und kann der Zustand einer vollständigen Rückfederung angenommen werden.

Die Größe der Messbereiche der Winkelmesseinheiten ermöglicht es, dass die Messung des Biegewinkels optional an einem Werkstückabschnitt erfolgt, der durch zwei oder mehr vorangegangene Biegevorgänge am Werkstück entstanden ist. Die Winkelmessung ist daher nicht auf einen unmittelbar zuvor gebogenen Werkstückabschnitt begrenzt, sondern kann die Auswertung der Winkelmessung speziell auf einen Werkstückabschnitt gerichtet werden, bei dem die höchsten Genauigkeitsanforderungen bestehen. Bei einer Radiusbiegung, die aus einer Vielzahl von nacheinander durchgeführten Teilbiegungen zusammengesetzt ist, kann die Messung des Biegewinkels am geraden Teilstück am Werkstückanfang erfolgen.

Bei größeren Werkstücken mit langen Biegekanten ist es vorteilhaft, wenn nach einem Biegevorgang der Biegewinkel am Werkstückabschnitt an mehreren in Längsrichtung des Biegebalkens zueinander distanzierten Positionen gemessen wird. Dadurch können allfällige Schwankungen des Biegewinkels in Längsrichtung des Biegebalkens erfasst und gegebenenfalls korrigiert werden.

Sehr genaue Biegewinkel, bei denen auch allfällige Verformungen der Schwenkbiegemaschine berücksichtigt werden können sind möglich, wenn basierend auf den Messungen nach einem vorhergehenden Biegevorgang ein nachfolgender Biegevorgang adaptiert wird, insbesondere eine Krümmung entlang der Längsrichtung eines Biegewerkzeuges vor oder während des nachfolgenden Biegevorganges aktiv beeinflusst wird, z.B. mittels einer Bombierungseinrichtung.

Zum besseren Verständnis der Erfindung wird diese anhand der nachfolgenden Figuren näher erläutert.

Es zeigen jeweils in stark vereinfachter, schematischer Darstellung:
- Fig. 1: einen Schnitt durch einen Biegebalken einer Schwenkbiegemaschine mit einem berührungslosen Biegewinkelmesssystem;
- Fig. 2: eine Ansicht eines Biegebalkens in Richtung II in Fig. 1;
- Fig. 3: einen Schnitt durch eine weitere Ausführungsform eines erfindungsgemäßen Biegebalkens;
- Fig. 4: einen Schnitt durch einen Biegebalken entlang Linie IV-IV in Fig. 3;
- Fig. 5: eine Darstellung der Anwendung eines erfindungsgemäßen Biegebalkens und
- Fig. 6: weitere Anwendungen eines erfindungsgemäßen Biegebalkens.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

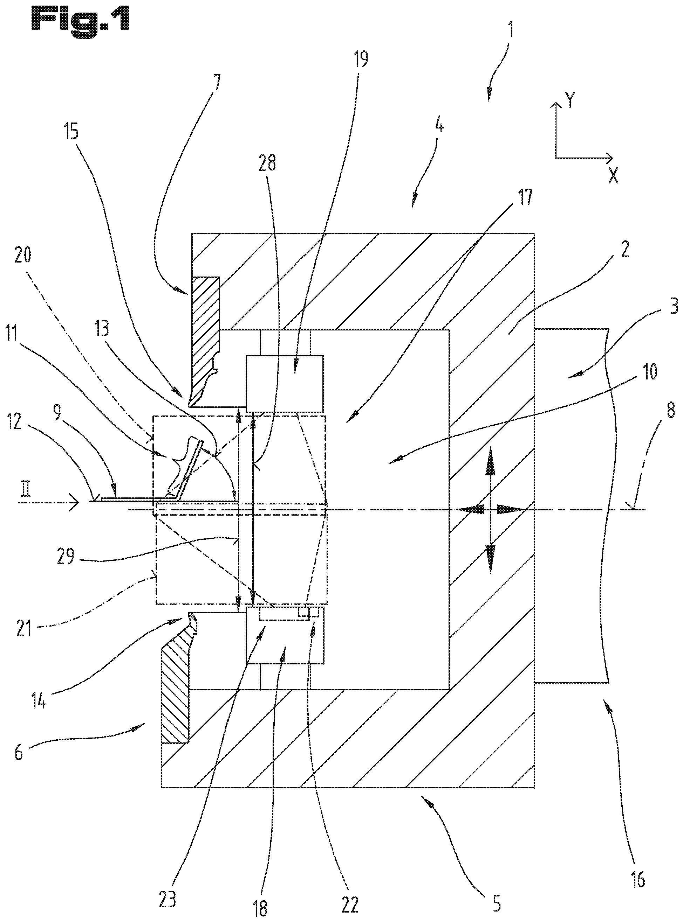

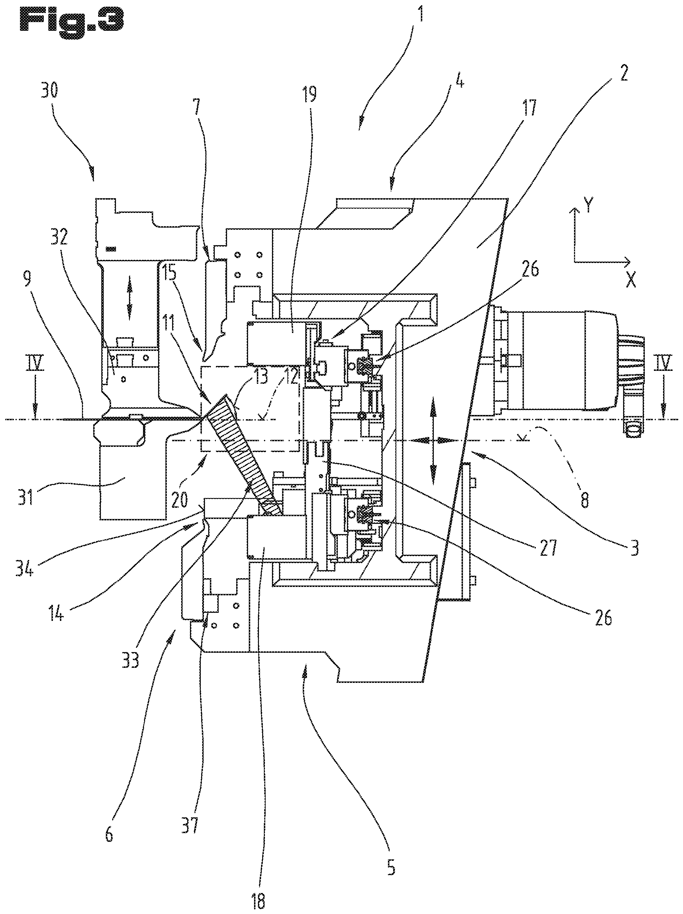

Fig. 1 zeigt einen Schnitt durch einen Biegebalken 1, einer nicht näher dargestellten Schwenkbiegemaschine, wie sie aus dem Stand der Technik bekannt ist. Der Biegebalken 1 ist rechtwinkelig zur Zeichnungsebene länglich und besitzt dabei einen etwa C-förmigen Balkenquerschnitt 2, der sich im Wesentlichen aus einer in etwa vertikaler Richtung verlaufenden Basis 3 und zwei anderen Enden in horizontaler Richtung anschließenden Schenkeln 4 und 5 zusammensetzt. An den freien Enden der beiden Schenkel 4 und 5 sind ein unteres erstes Biegewerkzeug 6 und ein oberes zweites Biegewerkzeug 7 befestigt, wobei diese bezüglich einer Mittelebene 8 des Biegebalkens 1 einander gegenüberliegen und einander zugewandt sind. Die Biegewerkzeuge 6, 7 können einen identischen Querschnitt aufweisen oder aber auch wie in Fig. 1 dargestellt einen unterschiedlichen Querschnitt aufweisen. Zur Durchführung eines Biegevorgangs kann ein Werkstück 9 in das vom C-förmigen Balkenquerschnitt 2 umschlossene Innere 10 des Biegebalkens 1 eingeführt werden und wird ein außerhalb des C-förmigen Balkenquerschnitts verbleibender Teil des Werkstücks 9 mittels einer Werkstückhalteeinrichtung (siehe Fig. 3) fixiert.

Ein zu biegender Werkstückabschnitt 11, der aus der Werkstückhalteeinrichtung hervorragt, wird entweder mittels des ersten Biegewerkzeuges 6 nach oben oder mittels des zweiten Biegewerkzeugs 7 nach unten gebogen, wodurch bezogen auf eine Referenzebene 12 ein bestimmter Biegewinkel 13 am Werkstück 9 bewirkt wird. Wird ein Werkstückabschnitt 11 mittels einer am ersten Biegewerkzeug 6 ausgebildeten ersten Arbeitskante 14 nach oben gebogen, wird auch von einer Positivbiegung gesprochen, während bei einer Biegung nach unten mittels einer zweiten Arbeitskante 15 am zweiten Biegewerkzeug 7 von einer Negativbiegung gesprochen wird.

Die zur Durchführung von Biegevorgängen erforderlichen Bewegungen des Biegebalkens 1 relativ zu einem feststehenden Maschinenrahmen der Schwenkbiegemaschine werden mittels eines Verstellantriebes 16 bewirkt, wobei sowohl Verstellbewegungen in vertikaler Y-Richtung, als auch in horizontaler X-Richtung und auch kombinierte Bewegungen ausführbar sind.

Die Verstellbewegungen werden vorteilhafterweise mittels einer programmierbaren Steuerungsvorrichtung der Schwenkbiegemaschine gesteuert, wodurch eine hohe Wiederholgenauigkeit der Biegevorgänge erzielt werden kann. Da der erzielbare Biegewinkel 13 an einem gebogenen Werkstückabschnitt 11 jedoch nicht nur von der durchgeführten Verstellbewegung des Biegebalkens 1 abhängt, sondern auch von Werkstückeigenschaften, wie z. B. Werkstückdicke und Werkstückfestigkeit abhängt, ist der durch einen Biegevorgang erzielbare Biegewinkel 13 immer gewissen Schwankungen unterworfen. Bei hohen Genauigkeitsanforderungen an den erzielten Biegewinkel ist es deshalb Stand der Technik, ein zweistufiges Biegeverfahren anzuwenden, das aus Vorbiegen und Nachbiegen bzw. Fertigbiegen zusammengesetzt ist. Beim Vorbiegen wird dabei der Werkstückabschnitt 11 auf einen Vorbiegewinkel gebogen, der kleiner ist als der angestrebte Endbiegewinkel und nach Durchführung des Vorbiegens wird das Umformverhalten des Werkstücks 9 beurteilt und beim Fertigbiegen der Biegeabschnitt unter Berücksichtigung des Umformverhaltens auf den Endbiegewinkel gebogen.

Der bedeutendste Faktor für die Biegewinkelgenauigkeit ist dabei die individuelle Rückfederung des Werkstückabschnitts 11 bei der Entlastung nach dem Biegevorgang. Wird beispielsweise bei einem Vorbiegen auf einen Winkel von 80° beim unbelasteten Werkstück 9 eine Rückfederung auf einen Biegewinkel von 77° festgestellt, wird diese Rückfederung von 3° bei einem nachfolgenden Nachbiegevorgang bzw. Fertigbiegevorgang dadurch berücksichtigt, dass bei einem angestrebten Endbiegewinkel von 90° im unbelasteten Zustand bei der Nachbiegung ein Winkel von 93° angewendet wird, um die zu erwartende Rückfederung von 3° zu kompensieren.

Um ein derartiges zweistufiges Biegeverfahren anwenden zu können, weist der Biegebalken 1 im Inneren 10 ein Winkelmesssystem 17 auf. Beim erfindungsgemäßen Biegebalken 1 umfasst das berührungslos arbeitende Winkelmesssystem 17 eine erste Winkelmesseinheit 18, die unterhalb der Mittelebene 8 angeordnet ist und nach oben orientiert ist und weiters eine zweite Winkelmesseinheit 19, die oberhalb der Mittelebene 8 angeordnet ist und nach unten orientiert ist. Der von der ersten Winkelmesseinheit 18 erfassbare erste Messbereich 20 ist in Fig. 1 mit strichlierten Linien dargestellt und liegt zum überwiegenden Teil oberhalb der Mittelebene 8. Der von der zweiten Winkelmesseinheit 19 erfassbare zweite Messbereich 21 ist in Fig. 1 mit strichpunktierten Linien dargestellt und liegt zum überwiegenden Teil unterhalb der Mittelebene 8.

Bei dieser Anordnung der Winkelmesseinheiten 18, 19 werden bei Positivbiegungen nach oben gebogene Werkstückabschnitte 11 hauptsächlich von der nach oben orientierten ersten, unterhalb der Mittelebene 8 angeordneten Winkelmesseinheit 18 gemessen und werden bei Negativbiegungen nach unten gebogene Werkstückabschnitte 11 hauptsächlich mit der der nach unten orientierten zweiten, oberhalb der Mittelebene 8 angeordneten Winkelmesseinheit 19 gemessen.

Der gesamte von dem Winkelmesssystem 17 erfassbare Messbereich setzt sich dabei aus dem ersten Messbereich 20 und dem zweiten Messbereich 21 zusammen und kann dadurch insgesamt ein vergleichsweise großer Anteil des Inneren 10 des Biegebalkens 1 messtechnisch erfasst werden.

Von Vorteil ist dabei, wenn sich der erste Messbereich 20 und der zweite Messbereich 21 im Bereich der Mittelebene 8 zwischen den Biegewerkzeugen 6 und 7 überlappen, also beide Messbereiche 20, 21 auch die Mittelebene 8 zwischen den Biegewerkzeugen 6, 7 einschließen. Durch die erfindungsgemäße Anordnung der Winkelmesseinheiten 18, 19 besteht eine große Flexibilität hinsichtlich der Lage eines zu vermessenden Werkstückabschnitts 11, wodurch auch bei komplizierten Werkstückgeometrien mit mehreren Biegekanten eine exakte Messung von Biegewinkeln 13 erfolgen kann.

Die Winkelmesseinheiten 18, 19 können vorteilhafterweise jeweils als Lichtschnittsensor ausgebildet sein, der einen Linienlaser 22 oder eine andere Lichtquelle, die einen ebenen Lichtfächer aussenden kann, umfasst und weiters eine dazu distanzierte Bilderfassungseinheit 23, z.B. eine Kamera mit geeigneter Optik und einem Bildsensor mit ausreichender Auflösung, umfasst. Alternativ dazu können aber auch andere berührungslos arbeitende Winkelmesssysteme eingesetzt werden, wie beispielsweise Laserscanner oder Time-Of-Flight-Kameras.

Bei der Verwendung eines Lichtschnittsensors, sendet der Linienlaser 22 Laserlicht vorzugsweise in einer Ebene aus, die rechtwinkelig zu den zu erzeugenden Biegekanten angeordnet ist, wodurch auf dem zu vermessenden Werkstück 11 deutlich sichtbare Laserlichtsegmente entstehen. Die zum Linienlaser 22 distanzierte Bilderfassungseinheit 23 betrachtet diese Laserlichtsegmente von der Seite und kann durch Triangulation aus den erfassten Bildern der Laserlichtsegmente der jeweilige Biegewinkel des betrachteten Laserlichtsegments bezogen auf eine Referenzebene errechnet werden. Der Messbereich eines derartigen Lichtschnittsensors ergibt sich aus der Schnittfläche zwischen der Ebene des Linienlasers und dem von der Abbildungsoptik und dem Bildsensor der Bilderfassungseinheit 23 bestimmten Erfassungsbereich. Die in Fig. 1 vereinfacht rechteckig darstellten Messbereiche 20, 21, können daher auch davon abweichende Formen aufweisen.

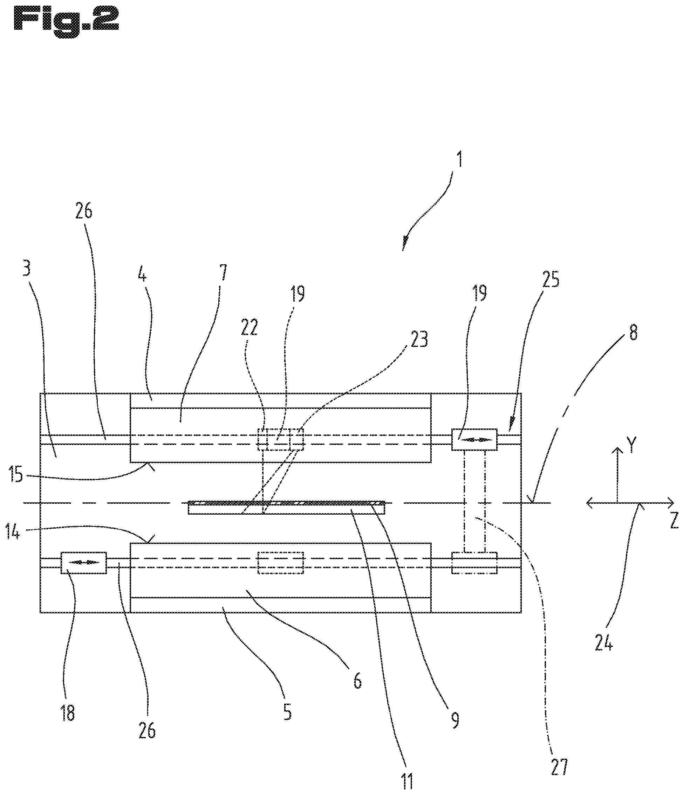

Fig. 2 zeigt eine Ansicht in Richtung II gemäß Fig. 1 auf eine weitere mögliche Ausführungsform eines Biegebalkens 1. Bei dieser Ausführungsform besitzt die Basis 3 des Balkenquerschnitts 2 in Z-Richtung, also der Längsrichtung 24 des Biegebalkens 1 eine größere Länge als die Biegewerkzeuge 6, 7, und können die Winkelmesseinheiten 18 und 19 mittels einer Führungsanordnung 25 in Längsrichtung 24 des Biegebalkens 1 verstellbar sein. Dadurch können bei langen Werkstücken 9, bei denen entlang der Biegekantenlänge Biegewinkelschwankungen auftreten können, auch an mehreren Positionen Messungen des Biegewinkels 13 durchgeführt werden. In Fig. 2 sind die Winkelmesseinheiten 18 und 19 an Führungsschienen 26 gelagert und können mittels eines nicht dargestellten Verstellantriebes entlang der Z-Richtung des Biegebalkens 1 von der programmierbaren Steuerungsvorrichtung des Winkelmesssystems 17 an unterschiedlichen Stellen positioniert werden.

In Fig. 2 ist mit strichlierten Linien eine Mittelstellung der zweiten Winkelmesseinheit 19 während einer Biegewinkelmessung eines nach unten gebogenen Werkstückabschnitts 11 dargestellt, wobei die Messebene des Linienlasers 22 und der Erfassungsbereich der seitlich dazu angeordneten Bilderfassungseinheit 23 ebenfalls mit strichlierten Linien angedeutet sind.

Da die Winkelmesseinheiten 18, 19 im Inneren 10 des Biegebalkens 1 eine Störkontur darstellen, die das Bearbeiten von bestimmten Werkstückgeometrien behindern kann, kann es von Vorteil sein, wenn die Winkelmesseinheiten 18, 19 mittels der Führungsanordnung 25 über Stirnenden der Biegewerkzeuge 6, 7 hinaus zur Seite verstellt werden können, da dadurch ein größerer Biegefreiraum im Inneren 10 des Biegebalkens 1 bereitgestellt wird. Die erste Winkelmesseinheit 18 und die zweite Winkelmesseinheit 19 können dabei, wie in Fig. 2 in Volllinien angedeutet, unabhängig voneinander verstellbar sein, es ist jedoch auch möglich, dass die Winkelmesseinheiten 18, 19, wie in Fig. 2 in strichlierten Linien angedeutet ist, auf einem gemeinsamen Laufwagen 27 befestigt sind. In diesem Fall kann ein gemeinsamer Verstellantrieb für den gemeinsamen Laufwagen 27 zur Verstellung der beiden Winkelmesseinheiten 18, 19 ausreichen. Ein derartiger Laufwagen 27 kann auf einer einzelnen Führungsschiene 26, vorteilhafterweise jedoch auf zwei Führungsschienen 26, geführt sein, wodurch eine hohe mechanische Stabilität des Laufwagens 27 und damit auch der Winkelmesseinheiten 18, 19 erzielt wird.

Da der Platzbedarf des Winkelmesssystems 17 auch die maximalen Abmessungen der für eine Vermessung des Biegewinkels geeigneten Werkstücke begrenzt, ist es von Vorteil, wenn, wie in Fig. 1 dargestellt, die lichte Weite 28 zwischen den beiden Winkelmesseinheiten 18 und 19 etwa dem Werkzeugabstand 29, zumindest aber 75 % des Werkzeugabstands 29, entspricht, und dadurch auch Werkstückabschnitte 11 vor dem Biegevorgang bis zwischen die Winkelmesseinheiten 18 und 19 ragen können.

Fig. 3 zeigt einen Schnitt durch eine weitere Ausführungsform eines Biegebalkens 1 und die Durchführung einer Biegewinkelmessung. Links vom Biegebalken 1 ist die Werkstückhaltevorrichtung 30 vereinfacht dargestellt, mit der ein Werkstück 9 zur Durchführung eines Biegevorgangs derart fixiert wird, dass ein gegenüber der Werkstückhalteeinrichtung 30 vorragender Werkstückabschnitt 11 mittels des ersten Biegewerkzeuges 6 nach oben oder mittels des zweiten Biegewerkzeuges 7 nach unten gebogen werden kann. Die Werkstückhalteeinrichtung 30 der Schwenkbiegemaschine umfasst dazu ein erstes Klemmwerkzeug 31 und ein mit diesem zusammenwirkendes, verstellbares zweites Klemmwerkzeug 32 zwischen denen ein Werkstück 9 geklemmt werden kann. Im Allgemeinen ist das untere erste Klemmwerkzeug 31 feststehend ausgeführt und bildet dessen oberseitige Klemmfläche eine feststehende Arbeitsebene, die für die Messung des Biegewinkels 13 als Referenzfläche 12 dienen kann.

Der in Fig. 3 dargestellte und in einem vorangegangenen Biegevorgang nach oben gebogene Werkstückabschnitt 11 wird vom Winkelmesssystem 17 nun auf folgende Weise vermessen. Der Biegebalken 1 wird mittels seines Verstellantriebes 16 (siehe Fig. 1) in eine Position gefahren, bei der der zu vermessende Werkstückabschnitt 11 innerhalb des ersten Messbereichs 20 der ersten Winkelmesseinheit 18 liegt. Anschließend wird die Winkelmesseinheit 18 in Längsrichtung des Biegebalkens 1, also in Richtung der Z-Achse in die gewünschte Messposition, die durch die Ebene des Linienlasers 22 definiert ist, gefahren. Die vom Linienlaser 22 beleuchteten Gegenstände ergeben eine Aneinanderreihung von Laserlichtsegmenten, die von der in Z-Richtung distanzierten Bilderfassungseinheit 23 erfasst werden. Mittels eines aus dem Stand der Technik bekannten Bildauswerteverfahrens, wird nun das Laserlichtsegment, das auf dem zu vermessenden Werkstückabschnitt 11 entsteht, identifiziert und wird mittels Triangulation aus dessen Winkelorientierung im erfassten Bild auf die tatsächliche Winkelorientierung im Raum und dadurch auch auf den erzielten Biegewinkel 13 zurückgerechnet. In Fig. 3 ist dabei der für die Biegewinkelmessung relevante Auswertebereich 33 schraffiert dargestellt.

Der jeweils ermittelte Biegewinkel 13 kann nun dazu verwendet werden, nachfolgende Biegevorgänge am selben Werkstück 9 derart ausgeführt werden, dass das Umformverhalten des Werkstückes 9, insbesondere die Rückfederung berücksichtigt wird und dadurch genauere Biegewinkel 13 erzielt werden. Weiters kann der gemessene Biegewinkel im Zuge des zuvor beschriebenen zweistufigen Biegeverfahrens zum Fertigbiegen derselben Biegekante herangezogen werden oder auch das an einem ersten Werkstück 9 festgestellte Umformverhalten auf andere gleichwertige Werkstücke 9 übertragen werden, ohne dass für diese eine eigene Biegewinkelmessung durchgeführt werden muss.

Die Winkelmesseinheiten 18 und 19 sind, wie bereits anhand von Fig. 2 beschrieben, an einem gemeinsamen Laufwagen 27 befestigt, der in Längsrichtung 24 des Biegebalkens 1 verstellbar auf zwei Laufschienen 26 geführt ist.

An diesem Laufwagen 27 kann optional ein Anschlagelement ausgebildet sein, das eine rechtwinkelig zur Mittelebene 8 orientierte Anschlagfläche 34 bildet. Diese Anschlagfläche 34 kann durch Verstellung des Biegebalkens 1 auf Höhe der Auflagefläche des ersten Klemmelementes 31 gebracht werden und dadurch beim Einlegen eines Werkstücks 9 eine definierte Ausgangsposition des Werkstücks 9 für nachfolgende Positionierbewegungen hergestellt werden, die z.B. mittels eines programmierbaren Manipulators ausgeführt werden.

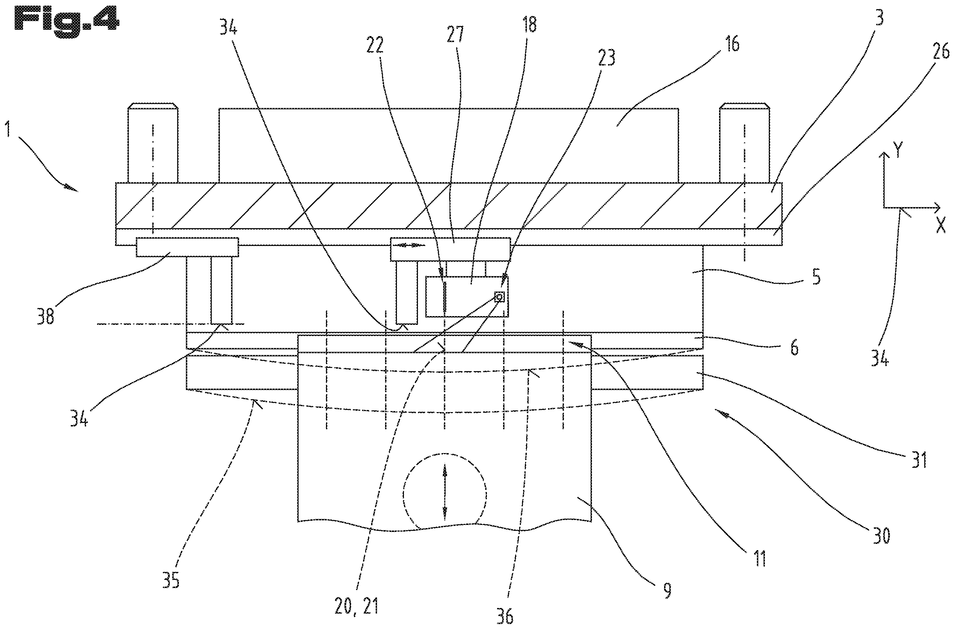

Fig. 4 zeigt eine vereinfachte Draufsicht auf einen Biegebalken 1 geschnitten entlang einer Linie IV - IV in Fig. 3.

Die erste Winkelmesseinheit 18 befindet sich bezogen auf die Längsrichtung 34 des Biegebalkens 1 dabei etwa in einer mittleren Stellung und ist durch eine strichlierte Linie der vom Linienlaser 22 ausgehende Messbereich 20 bzw. 21 dargestellt, in der eine Messung eines Biegewinkels 13 erfolgt. Links und rechts davon sind am Werkstück 9 weitere mögliche Messpositionen durch strichlierte Linien angedeutet, wodurch Schwankungen des Biegewinkels 13 entlang einer Biegekante festgestellt werden können. Dies kann insbesondere dadurch entstehen, dass an der Festhalteeinrichtung 30 oder auch am Biegebalken 1 durch die auftretenden Umformkräfte Abweichungen von der geraden Idealform auftreten. In Fig. 4 ist mit einer strichlierten Linie eine derartige Krümmung 35 der Werkstückhaltevorrichtung 30 angedeutet. Da bei einer derartigen Krümmung der Werkstückhalteeinrichtung 30 entlang der Biegekante unterschiedliche Biegewinkel 13 entstehen, ist es von Vorteil, wenn durch eine Bombierungseinrichtung am Biegebalken 1 am jeweiligen Biegewerkzeug 6 bzw. 7 eine gleichsinnige Krümmung 36 bewirkt werden kann, wie sie ebenfalls in übertriebener Darstellung durch eine strichlierte Linie am Biegewerkzeug 6 dargestellt ist. Eine derartige optionale Bombierungseinrichtung 37 ist in Fig. 3 am unteren ersten Biegewerkzeug 6 dargestellt. Eine derartige Bombierungseinrichtung 37 kann beispielsweise eine aktive Verformung des Biegewerkzeugs 6 im Mittelbereich nach außen bewirken oder auch alternativ bzw. zusätzlich die Nachgiebigkeit an den Enden des Biegewerkzeuges 6 erhöhen, wodurch ebenfalls eine konvexe Form des Biegewerkzeuges 6 bewirkt werden kann. Derartige Bombierungseinrichtungen 37 basieren z. B. auf der Verwendung von verschiebbaren Keilflächen und sind insbesondere aus dem Bereich der Abkantpressen bekannt und wird diesbezüglich auf aus dem Stand der Technik bekannte Ausführungsformen solcher Bombierungseinrichtungen 37 verwiesen. Alternativ oder zusätzlich kann eine derartige Bombierungseinrichtung 37 auch für das obere zweite Biegewerkzeug 7 vorgesehen sein. In Fig. 4 sind dabei Krümmungen in der X-Z-Ebene dargestellt, es können jedoch alternativ oder zusätzlich Krümmungen in der Y-Z-Ebene korrigierbar sein.

Fig. 4 zeigt weiters, dass optional ein zweiter Laufwagen 38 vorgesehen sein kann, an dem mittels eines geeigneten Anschlagelements eine zusätzliche Anschlagfläche 34 für ein Werkstück 9 ausgebildet sein kann. Ein derartiger zusätzlicher Laufwagen 38 kann weiters als Basis für spätere Ergänzungen mit zusätzlichen Winkelmesseinheiten ausgeführt sein.

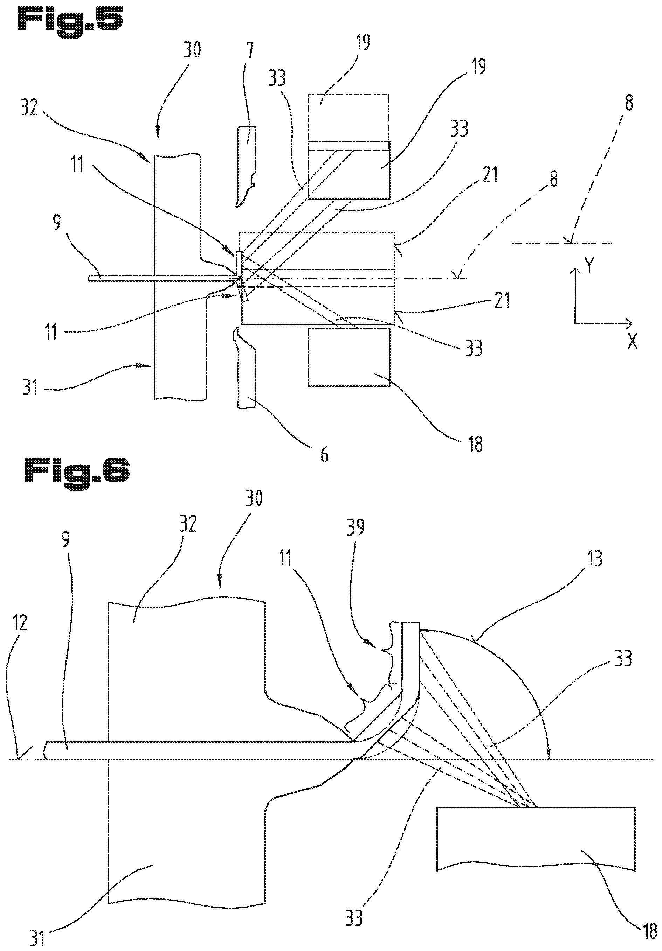

In Fig. 5 ist in einem weiteren Anwendungsbeispiel die Flexibilität des Winkelmesssystems 17 eines erfindungsgemäßen Biegebalkens 1 dargestellt. Ein nach oben gebogener Werkstückabschnitt 11 wird im Allgemeinen mit der ersten Winkelmesseinheit 18, die nach oben orientiert ist, vermessen, und wird ein nach unten gebogener strichliert dargestellter Werkstückabschnitt 11 mit der oberen zweiten Winkelmesseinheit 19 vermessen. Es ist jedoch durch geeignete Verstellung des Biegebalkens 1 in Y-Richtung nach oben auch möglich, den Messbereich 21 der zweiten Winkelmesseinheit 19 nach oben zu verlagern, wodurch der nach oben gebogene Werkstückabschnitt 11 in den angehobenen Messbereich 21 (mit strichlierten Linien dargestellt) verbracht werden kann. Diese Auswahlmöglichkeit, ob eine Biegewinkelmessung mit der von unten nach oben orientierten ersten Winkelmesseinheit 18 oder mit der von oben nach unten orientierten zweiten Winkelmesseinheit 19 erfolgt, erlaubt zusätzliche Freiheiten bei der möglichen vermessbaren Geometrie der Werkstücke 9.

Die Auswahl der jeweils zu verwendenden Winkelmesseinheit 18, 19 oder der geeigneten Positionierung des Biegebalkens 1 und/oder des Werkstücks 9 für die Durchführung von Biegewinkelmessungen kann vorteilhaft auch durch eine programmierbare Steuerungseinrichtung der Schwenkbiegemaschine erfolgen.

In Fig. 6 ist eine weitere mögliche Verwendung des Winkelmesssystems 17 eines erfindungsgemäßen Biegebalkens schematisch dargestellt. Hierbei ist mit strichlierten Linien ein innerhalb des Messbereichs 20 (siehe Fig. 1 und Fig. 3) liegender und bei der Bildauswertung des Winkelmesssystems 17 gewählter Auswertebereich 33 dargestellt, der auf einen Werkstückabschnitt 11 gerichtet ist, der aus einem unmittelbar vorhergehenden Biegevorgang entstanden ist. Es ist jedoch auch möglich, den Auswertebereich 33 auf einen Werkstückabschnitt 39 auszurichten, der durch zwei oder mehr vorangegangene Biegevorgänge am Werkstück 9 entstanden ist. Ein derartiger Auswertebereich 33 ist in Fig. 6 mit punktierten Linien angedeutet und wird in diesem Fall von der ersten Winkelmesseinheit 18 der Biegewinkel 13 des senkrecht nach oben ragenden Biegeschenkels gemessen. Somit kann durch geeignete Auswahl des jeweiligen Auswertebereichs 33 die Biegegenauigkeit speziell in jenem Werkstückabschnitt optimiert werden, der die höchsten Winkelgenauigkeitsanforderungen besitzt. Sollte beispielsweise der gerade Endabschnitt eines Biegeschenkels, der mit einem Biegeradius an den Rest eines Werkstücks 9 anschließt, einen exakten Biegewinkel 13 aufweisen, so kann das zuvor beschriebene stufenweise Vorbiegen und nachfolgende Fertigbiegen speziell auf diesem Werkstückabschnitt angewendet werden, indem der Auswertebereich 33 auf diesen Werkstückabschnitt 39 gelegt wird.

Im Zuge der Bildauswertung ist es auch möglich eine Abfolge von mehreren erfassten Laserlichtsegmenten als Gesamtheit zu erfassen und das daraus berechnete Ist-Profil eines Werkstücks mit einem Soll-Profil zu vergleichen, z.B. zur Kontrolle einer aus einer Vielzahl von Einzelbiegungen zusammengesetzten Radiusbiegung.

Zur genauen Durchführung von Biegewinkelmessungen kann es weiters vorteilhaft sein, vor Durchführung der Winkelmessung die Klemmung des Werkstücks 9 zumindest teilweise oder vollständig aufzuheben, wodurch nicht nur die Rückfederung durch das Aufheben der Umformkraft durch das Entfernen des Biegewerkzeugs 6, 7 wirksam wird, sondern auch aufgrund der Rückfederung in der Werkstückhaltevorrichtung vorhandene Winkeländerungen frei werden können, die den gemessenen Biegewinkel 13 verfälschen könnten.

Die oben beschriebenen Verfahrensschritte der Biegewinkelmessung sowie die sonstigen Ablaufschritte bei den Biegevorgängen werden vorteilhafterweise auch automatisch von einer programmierbaren Steuerungsvorrichtung einer Schwenkbiegemaschine durchgeführt bzw. ausgelöst werden.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Biegebalken | 31 | erstes Klemmwerkzeug |
| 2 | Balkenquerschnitt | 32 | zweites Klemmwerkzeug |
| 3 | Basis | 33 | Auswertebereich |
| 4 | Schenkel | 34 | Anschlagfläche |
| 5 | Schenkel | 35 | Krümmung |
| 6 | Erstes Biegewerkzeug | 36 | Krümmung |
| 7 | Zweites Biegewerkzeug | 37 | Bombierungseinrichtung |
| 8 | Mittelebene | 38 | Laufwagen |
| 9 | Werkstück | 39 | Werkstückabschnitt |
| 10 | Innere | | |
| 11 | Werkstückabschnitt | | |
| 12 | Referenzebene | | |
| 13 | Biegewinkel | | |
| 14 | erste Arbeitskante | | |
| 15 | zweite Arbeitskante | | |
| 16 | Verstellantrieb | | |
| 17 | Winkelmesssystem | | |
| 18 | erste Winkelmesseinheit | | |
| 19 | zweite Winkelmesseinheit | | |
| 20 | erster Messbereich | | |
| 21 | zweiter Messbereich | | |
| 22 | Linienlaser | | |
| 23 | Bilderfassungseinheit | | |
| 24 | Längsrichtung | | |
| 25 | Führungsanordnung | | |
| 26 | Führungsschiene | | |
| 27 | Laufwagen | | |
| 28 | Lichte Weite | | |
| 29 | Werkzeugabstand | | |
| 30 | Werkstückhaltereinrichtung | | |

## Patentansprüche

1. Biegebalken (1) für eine Schwenkbiegemaschine, wobei der längliche Biegebalken (1) einen etwa C-förmigen Balkenquerschnitt (2) und zwei bezüglich einer, vorzugsweise horizontalen Mittelebene (8) gegenüberliegende und einander zugewandte in Längsrichtung (24) des Biegebalkens (1) verlaufende Biegewerkzeuge (6, 7) aufweist, zwischen denen ein zu biegender Werkstückabschnitt (11) eines Werkstücks (9) einführbar ist und wobei in dem vom C-förmigen Balkenquerschnitt (2) umschlossenen Inneren (10) des Biegebalkens (1) ein Winkelmesssystem (17) zur berührungslosen Messung eines Biegewinkels (13) angeordnet ist, mit dem an einem von einem der Biegewerkzeuge (6, 7) gebogenen Werkstückabschnitt (11) ein auf eine Referenzebene (12) bezogener Biegewinkel (13) messbar ist, **dadurch gekennzeichnet, dass** das Winkelmesssystem (17) eine erste Winkelmesseinheit (18) umfasst, die unterhalb der Mittelebene (8) angeordnet ist und einen ersten Messbereich (20) aufweist, der zum überwiegenden Teil oberhalb der Mittelebene (8) liegt, und eine zweite Winkelmesseinheit (19) umfasst, die oberhalb der Mittelebene (8) angeordnet ist und einen zweiten Messbereich (21) aufweist, der zum überwiegenden Teil unterhalb der Mittelebene (8) liegt.

2. Biegebalken (1) nach Anspruch 1, **dadurch gekennzeichnet, dass** sowohl der erste Messbereich (20) als auch der zweite Messbereich (21) die Mittelebene (8) zwischen den Biegewerkzeugen (6, 7) einschließt.

3. Biegebalken (1) nach Anspruch 1 oder 2, **dadurch gekennzeichnet, dass** die Winkelmesseinheiten (18, 19) jeweils einen Lichtschnittsensor mit einem Linienlaser (22) und einer dazu distanzierten Bilderfassungseinheit (23) umfassen.

4. Biegebalken (1) nach einem der Ansprüche 1 bis 3, **dadurch gekennzeichnet, dass** die lichte Weite (28) zwischen den Winkelmesseinheiten (18, 19) zumindest 75 % eines zwischen den Biegewerkzeugen (6, 7) bestehenden Werkzeugabstandes (29) entspricht.

5. Biegebalken (1) nach einem der Ansprüche 1 bis 4, **dadurch gekennzeichnet, dass** die Winkelmesseinheiten (18, 19) mittels einer Führungsanordnung (25) in Längsrichtung (24) des Biegebalkens (1) verstellbar sind, insbesondere über ein Ende der Biegewerkzeuge (6, 7) hinaus verstellbar sind.

6. Biegebalken (1) nach Anspruch 5, **dadurch gekennzeichnet, dass** die Winkelmesseinheiten (18, 19) auf einem gemeinsamen Laufwagen (27) befestigt sind.

7. Biegebalken (1) nach Anspruch 6, **dadurch gekennzeichnet, dass** der Laufwagen (27) auf zwei voneinander distanzierten Führungsschienen (26) an einer von den Biegewerkzeugen (6, 7) distanzierten Basis (3) des Biegebalkens (1) geführt ist.

8. Biegebalken (1) nach Anspruch 6 oder 7, **dadurch gekennzeichnet, dass** am Laufwagen (27) auf Höhe des unteren Biegewerkzeuges (6) eine rechtwinkelig zur Mittelebene (8) rechtwinkelig orientierte Anschlagfläche (34) ausgebildet ist.

9. Biegebalken (1) nach einem der Ansprüche 1 bis 8, **dadurch gekennzeichnet, dass** am Biegebalken (1) eine Bombierungseinrichtung (37) zur Beeinflussung der Krümmung (36) entlang der Längsrichtung (24) eines Biegewerkzeuges (6, 7) ausgebildet ist.

10. Schwenkbiegemaschine, umfassend einen Maschinenrahmen, eine mit dem Maschinenrahmen verbundene Werkstückhalteeinheit (30) mit einem ersten Klemmwerkzeug (31) und einem mit diesem zusammenwirkenden, verstellbaren zweiten Klemmwerkzeug (32) zum Fixieren eines Werkstücks (9) in einer, insbesondere horizontalen, Arbeitsebene, so dass ein zu biegender Werkstückabschnitt (11) gegenüber der Werkstückhalteeinheit (30) vorragt, und einen am Maschinenrahmen verstellbar gelagerten und mit einem Verstellantrieb (16) verbundenen Biegebalken (1) zum Biegen des Werkstückabschnitts (11), **dadurch gekennzeichnet, dass** der Biegebalken (1) nach einem der Ansprüche 1 bis 9 ausgebildet ist.

11. Verfahren zum Messen eines Biegewinkels (13) an einem Werkstück (9) in einer Schwenkbiegemaschine mit einem länglichen Biegebalken (1), wobei dieser einen etwa C-förmigen Balkenquerschnitt (2) und zwei bezüglich einer, vorzugsweise horizontalen Mittelebene (8) gegenüberliegende und einander zugewandte in Längsrichtung (24) des Biegebalkens (1) verlaufende Biegewerkzeuge (6, 7) aufweist, zwischen denen ein zu biegender Werkstückabschnitt (11) eines Werkstücks (9) eingeführt wird und mittels eines in dem vom C-förmigen Balkenquerschnitt (2) umschlossenen Inneren (10) des Biegebalkens (1) angeordneten Winkelmesssystems (17) an einem zu vermessenden Werkstückabschnitt (11) der Biegewinkel (13) in Bezug auf eine Referenzebene (12) gemessen wird, **dadurch gekennzeichnet, dass**, insbesondere nach automatischer Festlegung durch eine programmierbare Steuerungsvorrichtung des Winkelmesssystems (17), der Biegewinkel (13) eines Werkstückabschnitts (11) mittels einer ersten unterhalb der Mittelebene (8) angeordneten Winkelmesseinheit (18) oder mittels einer zweiten oberhalb der Mittelebene (8) angeordneten Winkelmesseinheit (19) oder mittels erster Winkelmesseinheit (18) und zweiter Winkelmesseinheit (19) gemessen wird.

12. Verfahren nach Anspruch 11, **dadurch gekennzeichnet, dass** die Messung des Biegewinkels (13) nach Entfernung des Biegewerkzeugs (6, 7) vom Werkstück (9) und nachfolgender Deaktivierung oder Reduktion der Werkstückklemmung einer Werkstückhalteeinrichtung (30) erfolgt.

13. Verfahren nach Anspruch 11 oder 12, **dadurch gekennzeichnet, dass** die Messung des Biegewinkels (13) an einem Werkstückabschnitt (39) erfolgt, der durch zwei oder mehr vorangegangene Biegevorgänge am Werkstück (9) entstanden ist.

14. Verfahren nach einem der Ansprüche 11 bis 13, **dadurch gekennzeichnet, dass** nach einem Biegevorgang der Biegewinkel (13) am gebogenen Werkstückabschnitt (11) an mehreren in Längsrichtung (24) des Biegebalkens (1) zueinander distanzierten Positionen gemessen wird.

15. Verfahren nach Anspruch 14, **dadurch gekennzeichnet, dass** basierend auf den Messungen nach einem vorhergehenden Biegevorgang ein nachfolgender Biegevorgang adaptiert wird, insbesondere eine Krümmung (36) eines Biegewerkzeuges (6, 7) entlang seiner Längsrichtung (24) vor oder während des nachfolgenden Biegevorganges aktiv beeinflusst wird.

## Claims

1. A bending beam (1) for a swivel bending machine, wherein the elongated bending beam (1) has an approximately C-shaped beam cross section (2) and two bending tools (6, 7), which are disposed oppositely relative to a preferably horizontal central plane (8), which are turned toward one another and which extend in longitudinal direction (24) of the bending beam (1), and between which a workpiece portion (11) of a workpiece (9) to be bent can be introduced, and wherein, within the interior (10) of the bending beam (1) enclosed by the C-shaped beam cross section (2), an angle-measuring system (17) for contactless measurement of a bending angle (13) is disposed, with which a bending angle (13) can be measured relative to a reference plane (12) on a workpiece portion (11) being bent by one of the bending tools (6, 7), **characterized in that** the angle-measuring system (17) comprises a first angle-measuring unit (18), which is disposed underneath the central plane (8) and has a first measuring region (20), which is situated for the most part above the central plane (8), and comprises a second angle-measuring unit (19), which is disposed above the central plane (8) and has a second measuring region (21), which is situated for the most part underneath the central plane (8).

2. The bending beam (1) according to claim 1, **characterized in that** both the first measuring region (20) and the second measuring region (21) include the central plane (8) between the bending tools (6, 7).

3. The bending beam (1) according to claim 1 or 2, **characterized in that** the angle-measuring units (18, 19) each comprise a light-section sensor with a line laser (22) and an image-sensing unit (23) spaced apart from it.

4. The bending beam (1) according to one of claims 1 to 3, **characterized in that** the clear span (28) between the angle-measuring units (18, 19) corresponds to at least 75% of a tool spacing (29) that exists between the bending tools (6, 7).

5. The bending beam (1) according to one of claims 1 to 4, **characterized in that** the angle-measuring units (18, 19) are positionable by means of a guide arrangement (25) in longitudinal direction (24) of the bending beam (1), in particular positionable beyond one end of the bending tools (6, 7).

6. The bending beam (1) according to claim 5, **characterized in that** the angle-measuring units (18, 19) are fastened on a common carriage (27).

7. The bending beam (1) according to claim 6, **characterized in that** the carriage (27) is guided on two guide rails (26) spaced apart from one another on a base (3) of the bending beam (1) spaced apart from the bending tools (6, 7).

8. The bending beam (1) according to claim 6 or 7, **characterized in that** a stop surface (34) at right angles to the central plane (8) oriented at right angles is formed on the carriage (27) at the height of the lower bending tool (6).

9. The bending beam (1) according to one of claims 1 to 8, **characterized in that** a cambering device (37) for influencing the curvature (36) along the longitudinal direction (24) of a bending tool (6, 7) is formed on the bending beam (1).

10. A swivel bending machine, comprising a machine frame, a workpiece-holding unit (30) which has a first clamping tool (31) and which is joined to the machine frame, and a positionable second clamping tool (32) interacting therewith for fixation of a workpiece (9) in a working plane, which in particular is horizontal, so that a workpiece portion (11) to be bent protrudes relative to the workpiece-holding unit (30), and a bending beam (1) mounted positionably on the machine frame and joined to a positioning drive (16) for bending the workpiece portion (11), **characterized in that** the bending beam (1) is formed according to one of claims 1 to 9.

11. A method for measuring a bending angle (13) on a workpiece (9) in a swivel bending machine with an elongated bending beam (1), wherein said bending beam (1) has an approximately C-shaped beam cross section (2) and two bending tools (6, 7), which are disposed oppositely relative to a preferably horizontal central plane (8), which are turned toward one another and which extend in longitudinal direction (24) of the bending beam (1), and between which a workpiece portion (11) of a workpiece (9) to be bent is introduced and, by means of an angle-measuring system (17) disposed within the interior (10) of the bending beam (1) enclosed by the C-shaped beam cross section (2), the bending angle (13) is measured relative to a reference plane (12) on a workpiece portion (11) to be gauged, **characterized in that**, in particular after automatic definition by a programmable control device of the angle-measuring system (17), the bending angle (13) of a workpiece portion (11) is measured by means of a first angle-measuring unit (18), which is disposed underneath the central plane (8) or by means of a second angle-measuring unit (19), which is disposed above the central plane (8), or by means of the first angle-measuring unit (18) and the second angle-measuring unit (19).

12. The method according to claim 11, **characterized in that** the measurement of the bending angle (13) takes place after removal of the bending tool (6, 7) from the workpiece (9) and subsequent deactivation or reduction of the workpiece clamping of a workpiece-holding device (30).

13. The method according to claim 11 or 12, **characterized in that** the measurement of the bending angle (13) takes place on a workpiece portion (39) that was obtained by two or more preceding bending operations on the workpiece (9).

14. The method according to one of claims 11 to 13, **characterized in that**, after a bending operation, the bending angle (13) on the workpiece portion (11) is measured at several positions spaced apart from one another in longitudinal direction (24) of the bending beam (1).

15. The method according to claim 14 **characterized in that**, based on the measurements after a preceding bending operation, a subsequent bending operation is adapted, and in particular a curvature (36) of a bending tool (6, 7) along its longitudinal direction (24) is actively influenced before or during the subsequent bending operation.

## Revendications

1. Barre de pliage (1) pour une plieuse pivotante, la barre de pliage (1) allongée présentant une section transversale de barre (2) sensiblement en forme de C et deux outils de pliage (6, 7) se faisant face par rapport à un plan central (8) de préférence horizontal et placés en étant tournés l'un vers l'autre dans la direction longitudinale (24) de la barre de pliage (1), outils entre lesquels un tronçon de pièce (11) à plier d'une pièce (9) peut être introduit, et un système de mesure d'angle (17) destiné à la mesure sans contact d'un angle de pliage (13) étant disposé dans l'intérieur (10) de la barre de pliage (1) qui est entouré par la section transversale de barre (2) en forme de C, système de mesure avec lequel un angle de pliage (13) rapporté à un plan de référence (12) peut être mesuré sur un tronçon de pièce (11) plié par l'une des outils de pliage (6, 7), **caractérisée en ce que** le système de mesure d'angle (17) comprend une première unité de mesure d'angle (18) qui est disposée au-dessous du plan central (8) et qui comporte une première zone de mesure (20) qui est en majeure partie située au-dessus du plan central (8), et comprend une deuxième unité de mesure d'angle (19) qui est située au-dessus du plan central (8) et qui comporte une deuxième zone de mesure (21) qui est en majeure partie située au-dessous du plan central (8).

2. Barre de pliage (1) selon la revendication 1, **caractérisée en ce qu'**aussi bien la première zone de mesure (20) que la deuxième zone de mesure (21) inclut le plan central (8) entre les outils de pliage (6, 7).

3. Barre de pliage (1) selon la revendication 1 ou 2, **caractérisée en ce que** les unités de mesure d'angle (18, 19) comprennent respectivement un capteur à coupe optique doté d'un laser linéaire (22) et d'une unité de détection d'image (23) qui en est distante.

4. Barre de pliage (1) selon l'une des revendications 1 à 3, **caractérisée en ce que** la largeur intérieure (28) entre les unités de mesure d'angle (18, 19) correspond au moins à 75 % d'un intervalle d'outils (29) existant entre les outils de pliage (6, 7).

5. Barre de pliage (1) selon l'une des revendications 1 à 4, **caractérisée en ce que** les unités de mesure d'angle (18, 19) peuvent être réglées au moyen d'un dispositif de guidage (25) dans la direction longitudinale (24) de la barre de pliage (1), en particulier peuvent être réglées au-delà d'une extrémité des outils de pliage (6, 7).

6. Barre de pliage (1) selon la revendication 5, **caractérisée en ce que** les unités de mesure d'angle (18, 19) sont fixées sur un chariot (27) commun.

7. Barre de pliage (1) selon la revendication 6, **caractérisée en ce que** le chariot (27) est guidé sur deux rails de guidage (26) distants l'un de l'autre au niveau d'une base (3) de la barre de pliage (1) qui est distante des outils de pliage (6, 7).

8. Barre de pliage (1) selon la revendication 6 ou 7, **caractérisée en ce qu'**une surface de butée (34) orientée à angle droit par rapport au plan central (8) est constituée sur le chariot (27) à la hauteur de l'outil de pliage (6) inférieur.

9. Barre de pliage (1) selon l'une des revendications 1 à 8, **caractérisée en ce que**, sur la barre de pliage (1), un système de bombement (37) est constitué pour agir sur la courbure (36) le long de la direction longitudinale (24) d'un outil de pliage (6, 7).

10. Plieuse pivotante, comprenant un châssis de machine, une unité de retenue de pièce (30), raccordée au châssis de machine, avec un premier outil de serrage (31) et un deuxième outil de serrage (32) réglable coopérant avec celui-ci pour la fixation d'une pièce (9) dans un plan de travail, en particulier horizontal, de telle sorte qu'un tronçon de pièce (11) à plier dépasse par rapport à l'unité de retenue de pièce (30), et comprenant une barre de pliage (1) supportée de façon réglable sur le châssis de machine et raccordée à une commande de réglage (16) pour le pliage du tronçon de pièce (11), **caractérisée en ce que** la barre de pliage (1) est constituée selon l'une des revendications 1 à 9.

11. Procédé de mesure d'un angle de pliage (13) sur une pièce (9) dans une plieuse pivotante avec une barre de pliage (1) allongée, celle-ci comportant une section transversale de barre (2) sensiblement en forme de C et deux outils de pliage (6, 7) se faisant face par rapport à un plan central (8) de préférence horizontal et placés en étant tournés l'un vers l'autre dans la direction longitudinale (24) de la barre de pliage (1), outils entre lesquels un tronçon de pièce (11) à plier d'une pièce (9) est introduit, et l'angle de pliage (13) par rapport à un plan de référence (12) étant mesuré sur un tronçon de pièce (11) à mesurer au moyen d'un système de mesure d'angle (17) disposé dans l'intérieur (10) de la barre de pliage (1) entouré par la section transversale de barre (2) en forme de C, **caractérisé en ce que**, en particulier après une spécification automatique par un dispositif de commande programmable du système de mesure d'angle (17), l'angle de pliage (13) d'un tronçon de pièce (11) est mesuré au moyen d'une première unité de mesure d'angle (18) disposée au-dessous du plan central (8) ou au moyen d'une deuxième unité de mesure d'angle (19) disposée au-dessus du plan central (8) ou au moyen de la première unité de mesure d'angle (18) et de la deuxième unité de mesure d'angle (19).

12. Procédé selon la revendication 11, **caractérisé en ce que** la mesure de l'angle de pliage (13) s'effectue après avoir enlevé de la pièce (9) l'outil de pliage (6, 7) et après une désactivation ou réduction ultérieure du serrage de pièce d'une unité de retenue de pièce (30).

13. Procédé selon la revendication 11 ou 12, **caractérisé en ce que** la mesure de l'angle de pliage (13) s'effectue sur un tronçon de pièce (39) qui a été créé par deux processus de pliage ou plus effectués précédemment sur la pièce (9).

14. Procédé selon l'une des revendications 11 à 13, **caractérisé en ce que**, après un processus de pliage, l'angle de pliage (13) est mesuré sur le tronçon de pièce (11) plié dans plusieurs positions distantes les unes des autres dans la direction longitudinale (24) de la barre de pliage (1).

15. Procédé selon la revendication 14, **caractérisé en ce que**, sur la base des mesures, après un processus de pliage antérieur, un processus de pliage suivant est adapté, en particulier une courbure (36) d'un outil de pliage (6, 7) le long de sa direction longitudinale (24) est influencée activement avant ou pendant le processus de pliage suivant.
